# EUROPÄISCHE PATENTANMELDUNG

(11) **EP 0 790 342 A2**
(43) Veröffentlichungstag der Anmeldung: **20.08.1997**
(21) Anmeldenummer: 97102132.4
(22) Anmeldetag: 11.02.1997
(51) Int. Cl.: D04H 13/00, D04H 1/00

(54) **Glasfaserverstärktes Halbzeug**

(30) Priorität: 17.02.1996 DE 19605900
(71) Anmelder: BASF AKTIENGESELLSCHAFT, 67056 Ludwigshafen (DE)
(72) Erfinder: Ittemann, Peter, Dr., 68623 Lampertheim (DE); Brentrup, Karl-Ludwig, 49504 Lotte (DE); Dittmar, Harri, 67271 Battenberg (DE)

(57) **Zusammenfassung**

Die Erfindung betrifft ein Halbzeug aus einem thermoplastischen Polymeren und einem genadelten textilen Flächengebilde, welches mindestens eine Schicht aus einem Fasergewebe mit einem Flächengewicht von mehr als 300 g/m² und mindestens eine Schicht aus nicht orientierten Glasfasern enthält.

## Beschreibung

Die Erfindung betrifft ein glasfaserverstärktes, thermoplastisch verformbares Halbzeug aus einem thermoplastischen Polymeren und einem durch Nadelung fixierten textilen Flächengebilde.

Verbundwerkstoffe aus einer Thermoplastmatrix und Glasfasermatten als Verstärkungsmaterial werden in zunehmendem Maße zur Herstellung von Automobilteilen verwendet. Da die Fasern in den Glasmatten statistisch verteilt sind, sind die Festigkeitseigenschaften der flächigen Verbundwerkstoffe in allen Richtungen der Ebene gleich. Will man Fertigteile herstellen, die eine bevorzugte Verstärkung in einer Richtung aufweisen, dann verwendet man ein Verstärkungsmaterial mit Glasfasern, die zumindest teilweise in einer Richtung ausgerichtet sind. Ein derartiges faserverstärktes Halbzeug ist in EP-A 323 571 beschrieben. Dort wird als Verstärkungsmaterial ein genadeltes textiles Flächengebilde eingesetzt, welches Schichten A aus orientierten Endlosfasern mit einem Flächengewicht von maximal 300 g/m² und Schichten B aus nicht orientierten Fasern enthält. Die orientierten Endlosfasern liegen vorzugsweise als Gelege aus parallelen Fasern (UD-Fasern) vor. Zur Herstellung der textilen Flächengebilde werden abwechselnd Glasfasermatten und UD-Fasern in Form von Rovings übereinander abgelegt und miteinander vernadelt. Dabei ist es schwierig, beim Ablegen der einzelnen Rovings nebeneinander konstante Abstände einzuhalten, außerdem ergeben sich Schwierigkeiten bei einem kontinuierlich durchgeführten Prozeß, wenn beim Abspulen ein Roving zu Ende ist und mit dem nächsten verknüpft werden muß.

Der Erfindung lag daher die Aufgabe zugrunde, ein glasfaserverstärktes Halbzeug mit unidirektionaler Faserorientierung bereitzustellen, welches auf einfache Weise herstellbar ist.

Diese Aufgabe wird erfindungsgemäß dadurch gelöst, daß mindestens eine Schicht des textilen Flächengebildes aus einem speziellen Fasergewebe besteht.

Gegenstand der Erfindung ist demzufolge ein glasfaserverstärktes, thermoplastisch verformbares Halbzeug, enthaltend ein thermoplastisches Polymeres und ein durch Nadelung fixiertes textiles Flächengebilde, welches besteht aus:
A. mindestens einer Schicht A aus einem Fasergewebe mit einem Flächengewicht von mehr als 300 g/m², bestehend aus 80 - 97 Gew.-% Glasfasern in Kett- bzw. Schußrichtung und 20 - 3 Gew.-% Glasfasern oder Thermoplastfasern in Schuß- bzw. Kettrichtung, und
B. mindestens einer Schicht B aus einer Glasfasermatte mit nicht orientierten Fasern,
wobei das Gewichtsverhältnis Fasergewebe A zu Fasermatten B 75:25 bis 30:70 beträgt und das Halbzeug einen Gesamtglasgehalt von 30 bis 60 Gew.-% aufweist.

Nach EP-A 323 571 kann zwar die Schicht A auch aus einem Gewebe bestehen, bei dem die Endlosfasern in zwei oder mehreren Vorzugsrichtungen orientiert sind. Dabei wird aber vorgeschrieben, daß die Schichten A verhältnismäßig dünn sein sollten und ihr Flächengewicht 300 g/m² nicht übersteigen darf, damit eine gute Durchtränkung des textilen Flächengebildes mit der Thermoplastschmelze möglich ist. Dieses Vorurteil überwindet die vorliegende Erfindung. Außerdem weisen Verbundmaterialien, die mit üblichem Gewebe verstärkt sind, zwei Vorzugsrichtungen auf, nämlich in Kett- und in Schußrichtung, während mit den erfindungsgemäß eingesetzten Geweben Verbundmaterialien erhalten werden, die im wesentlichen in nur einer Vorzugsrichtung (nämlich in Kett- oder in Schußrichtung) verstärkt sind.

Als Matrix für das erfindungsgemäße faserverstärkte Halbzeug sind vorzugsweise teilkristalline thermoplastische Polymere geeignet, beispielsweise Polyolefine, Polyamide, gesättigte Polyester und Polyetherketone. Besonders gut geeignet ist Polypropylen mit einem Schmelzindex MFI zwischen 5 und 500, insbesondere zwischen 50 und 400 [g/10 min] (bei 230°C/2,16 kg), sowie entsprechende Pfropfcopolymerisate, z.B. mit Acrylsäure oder Maleinsäureanhydrid. Wenn man als Polymermatrix eine Mischung verwendet aus 99 - 80 Gew.-% Polypropylen und 1 - 20 Gew.-% eines Maleinsäureanhydrid gepfropften Polypropylens, dann erhält man Verbundwerkstoffe mit besonders guter Festigkeit und Steifigkeit. Dem Polymeren können bis zu 100 Gew.-% Rezyklat von aufgearbeitetem Abfallmaterial mit 20 bis 50 Gew.-% kurzen Glasfasern zugesetzt sein, ferner kann es die üblichen Zusatzstoffe wie Stabilisatoren, Füllstoffe und Flammschutzmittel enthalten.

Das Verstärkungsmaterial ist ein textiles Flächengebilde, das aus mindestens einer Schicht A aus einem Fasergewebe und mindestens einer Schicht B aus einer Fasermatte besteht.

Das Fasergewebe A weist ein Flächengewicht von mehr als 300 g/m², vorzugsweise von mehr als 400 g/m² auf. Bei zu niedrigem Flächengewicht ist die Herstellung des Gewebes zu teuer. Das Flächengewicht sollte 1300 g/m² nicht überschreiten, da sonst die Tränkbarkeit nicht mehr ausreichend ist. Wesentlich ist, daß der Anteil der Glasfasern in Kettrichtung oder in Schußrichtung mindestens 80 Gew.-% beträgt, so daß eine Verstärkungsrichtung im Verbundwerkstoff eindeutig bevorzugt ist. Die in der untergeordneten Richtung im Gewebe liegenden Fasern mit einem Anteil von 3 bis 20, vorzugsweise 5 bis 15 Gew.-% dienen hauptsächlich zum Zusammenhalt des Gewebes und zur Fixierung der in der Hauptrichtung liegenden Glasfasern. Diese Fasern der untergeordneten Richtung können ebenfalls Glasfasern sein, man kann aber auch Thermoplastfasern verwenden, wobei wiederum die oben aufgezählten teilkristallinen Thermoplasten, insbesondere Polypropylenfasern geeignet sind.

Die Schicht B ist eine Glasfasermatte mit ungerichteten Fasern. Dafür sind die üblichen Wirrfaser-Matten oder -Vliese sowie Stapelfasergelege oder -matten geeignet. Ferner kann die Schicht B aus unregelmäßig auf der Schicht A abgelegten Schnittfasern oder Endlosfasern bestehen,

Ein gewisser Mindestgehalt an nicht orientierten Fasern in dem textilen Flächengebilde ist erforderlich, da die entsprechenden Schichten Poren und Hohlräume enthalten, in welche die Kunststoffschmelze eindringen kann, und da hierdurch die Fließfähigkeit des Materials beim Verpressen des Halbzeugs zum Fertigteil erhöht wird. Andererseits führt ein hoher Gehalt an orientierten Fasern zu Fertigteilen mit günstigen Festigkeitseigenschaften in Richtung der Faserorientierung. Das Gewichtsverhältnis der Faserschichten A:B in dem textilen Flächengebilde beträgt 75:25 bis 30:70, vorzugsweise 70:30 bis 40:60. Bevorzugt sind die Schichten im textilen Flächengebilde symmetrisch angeordnet. Besonders bevorzugte Anordnungen sind:
ABA, ABABA, ABABABA und BAB, BABAB, BABABAB.

Wesentlich ist, daß die einzelnen Schichten des textilen Flächengebildes miteinander vernadelt sind. Durch die Nadelung werden die einzelnen Schichten zu dem textilen Flächengebilde verbunden. Außerdem wird das Flächengebilde schubsteif. Die Einzelfilamente der Schichten A werden beim Nadeln im wesentlichen nicht beschädigt, sondern lediglich aufgelockert. Dagegen erfolgt in den Schichten B ein geringer Faserbruch, was dazu führt, daß das Halbzeug bei der Verarbeitung durch Pressen eine wenigstens beschränkte Fließfähigkeit aufweist. Das Nadeln erfolgt auf üblichen Nadelmaschinen mit Filznadeln. Die Einstichzahl kann in weiten Grenzen zwischen 10 und 200 Einstichen pro cm² schwanken, bevorzugt liegt sie zwischen 20 und 100.

Die Einstellung der Halbzeuge erfolgt nach an sich bekannten Verfahren, beispielsweise nach dem in der DE-A 23 12 816 beschriebenen Verfahren. Eine diskontinuierliche Fertigung in einer hydraulischen Presse ist denkbar. Den textilen Flächengebilden ist dabei so viel Thermoplastschmelze hinzuzufügen, daß ein Glasgehalt zwischen 30 und 60 Gew.-%, vorzugsweise 40 - 55 Gew.-%, erreicht wird. Die Halbzeugdicke kann je nach Flächengewicht des genadelten Gewebes oder Geleges zwischen 0,5 und 6 mm, vorzugsweise 2 bis 4 mm, betragen.

Bei einer bevorzugten Ausführungsform zur Herstellung der erfindungsgemäßen Halbzeuge werden zwei textile Flächengebilde zwischen drei aus Extrudern mit Breitschlitzdüsen ausgepreßten Schmelzeschichten zusammengeführt und - wie z.B. in DE-B 29 48 235 beschrieben - miteinander verpreßt, wobei die Schmelze die textilen Flächengebilde durchtränkt und imprägniert. Dabei ist es bevorzugt, daß die Flächengebilde so angeordnet sind, daß die Schichten A nach außen zu liegen kommen und so die Oberfläche des Halbzeugs bilden. Dadurch wird die Oberfläche des aus dem Halbzeug hergestellten Fertigteils infolge der etwas matrixreicheren Außenseiten des Halbzeugs glatter.

Die erfindungsgemäßen Halbzeuge können nach üblichen Preß- und Stanzverfahren bei Temperaturen oberhalb des Erweichungspunktes der thermoplastischen Polymeren zu Fertigteilen, insbesondere für den Automobil- und Maschinenbau verarbeitet werden.

### Beispiel 1

Es wird das folgende textile Flächengebilde aufgebaut:
1. Lage (B): Geschnittene Glasfasern mit einer Feinheit von 2400 tex und einem Flächengewicht von 235 g/m²
2. Lage (A): Glasfasergewebe aus 570 g/m² Fasern in Kettenrichtung und 30 g/m² Fasern in Schußrichtung (Verhältnis 95/5 Kette/Schuß).
3. Lage (B:) Geschnittene Glasfasern mit einer Feinheit von 2400 tex und einem Flächengewicht von 235 g/m².

Dieses textile Flächengebilde wird durch eine Nadelmaschine geführt und mit einer Einstichzahl von 50 Einstichen/cm² bei einer Einstichtiefe von 9 mm und einem Durchgang von 11 mm zusammengenadelt. Der Vorschub betrug 11 mm/Hub.

Es entsteht ein Flächengebilde mit 1070 g/m² Flächengewicht und der Lagenabfolge B/A/B. Der Anteil der Fasergewebelage A am Gesamtflächengebilde beträgt 56 %.

Zwei solcher Flächengebilde werden dann zwischen 3 Schmelzeschichten aus Polypropylen, die aus einem Extruder über Breitschlitzdüsen verteilt werden, geführt, in der Heizpreßzone einer Doppelbandpresse getränkt und anschließend unter Druck durch Abkühlung fixiert. Das Halbzeug ist 4,1 mm dick und hat einen Glasgehalt von 42 Gew.-%.

### Beispiel 2

Es wird das folgende textile Flächengebilde aufgebaut:
1. Lage (B): Geschnittene Glasfasern mit einer Feinheit von 2400 tex und einem Flächengewicht von 245 g/m².
2. Lage (A): Glasfasergewebe aus 30 g/m² Fasern in Kettenrichtung und 570 g/m² Fasern in Schußrichtung (Verhältnis 5/95 Kette/Schuß).
3. Lage (B): Geschnittene Glasfasern mit einer Feinheit von 2400 tex und einem Flächengewicht von 245 g/m².

Dieses textile Flächengebilde wird durch eine Nadelmaschine geführt und mit einer Einstichzahl von 50 Einsticken/cm² bei einer Einstichtiefe von 9 mm und einem Durchgang von 11 mm zusammengenadelt. Der Vorschub betrug 11 mm/Hub.

Es entsteht ein Flächengebilde mit 1090 g/m² Flächengewicht und der Lagenabfolge B/A/B. Der Anteil der Fasergewebelage A am Gesamtflächengebilde beträgt 55 %.

Zwei solcher Flächengebilde werden dann zwischen 3 Schmelzeschichten aus Polypropylen, die aus einem Extruder über Breitschlitzdüsen verteilt werden, geführt, in der Heizpreßzone einer Doppelbandpresse getränkt und anschließend unter Druck durch Abkühlung fixiert. Das Halbzeug ist 3,8 mm dick und hat einen Glasgehalt von 45 Gew.-%.

### Beispiel 3

1. Lage (A): Glasfasergewebe aus 380 g/m² Fasern in Kettenrichtung und 20 g/m² Fasern in Schußrichtung (Verhältnis 95/5 Kette/Schuß).
2. Lage (B): Geschnittene Glasfasern mit einer Feinheit von 2400 tex und einem Flächengewicht von 470 g/m².
3. Lage (A): Glasfasergewebe aus 380 g/m² Fasern in Kettenrichtung und 20 g/m² Fasern in Schußrichtung (Verhältnis 95/5 Kette/Schuß).

Dieses textile Flächengebilde wird durch eine Nadelmaschine geführt und mit einer Einstichzahl von 50 Einsticken/cm² bei einer Einstichtiefe von 11 mm zusammengenadelt. Der Vorschub betrug 10 mm/Hub.

Es entsteht ein Flächengebilde mit 1270 g/m² Flächengewicht und der Lagenabfolge A/B/A. Der Anteil der Fasergewebelage A am Gesamtflächengebilde beträgt 63 %.

Zwei solcher Flächengebilde werden dann zwischen 3 Schmelzeschichten aus Polypropylen, die aus einem Extruder über Breitschlitzdüsen verteilt werden, geführt, in der Heizpreßzone einer Doppelbandpresse getränkt und anschließend unter Druck durch Abkühlung fixiert. Das Halbzeug ist 3,8 mm dick und hat einen Glasgehalt von 50 Gew.-%.

### Beispiel 4

Es wird das folgende textile Flächengebilde aufgebaut:
1. Lage (B): Geschnittene Glasfasern mit einer Feinheit von 2400 tex und einem Flächengewicht von 325 g/m².
2. Lage (A): Glasfasergewebe aus 450 g/m² Fasern in Kettenrichtung und 50 g/m² Fasern in Schußrichtung (Verhältnis 90/10 Kette/Schuß).
3. Lage (B): Geschnittene Glasfasern mit einer Feinheit von 2400 tex und einem Flächengewicht von 325 g/m².

Es entsteht ein Flächengebilde mit 1150 g/m² Flächengewicht und der Lagenabfolge B/A/B. Der Anteil der Fasergewebelage A am Gesamtflächengebilde beträgt 43 %.

Zwei solcher Flächengebilde werden dann zwischen 2 Schmelzeschichten aus Polypropylen, die aus einem Extruder über Breitschlitzdüsen verteilt werden, geführt, in der Heizpreßzone einer Doppelbandpresse getränkt und anschließend unter Druck durch Abkühlung fixiert. Das Halbzeug ist 2 mm dick und hat einen Glasgehalt von 45 Gew.-%.

## Patentansprüche

1. Glasfaserverstärktes, thermoplastisch verformbares Halbzeug, enthaltend ein thermoplastisches Polymeres und ein durch Nadelung fixiertes textiles Flächengebilde, dadurch gekennzeichnet, daß das textile Flächengebilde besteht aus:
A. mindestens einer Schicht A aus einem Fasergewebe mit einem Flächengewicht von mehr als 300 g/m², enthaltend 80 - 97 Gew.-% Glasfasern in Kettrichtung und 20 - 3 Gew.-% Glasfasern oder Thermoplastfasern in Schußrichtung, und
B. mindestens einer Schicht B aus einer Glasfasermatte mit nicht orientierten Fasern,
wobei das Gewichtsverhältnis Fasergewebe A zu Fasermatten B 75:25 bis 30:70 beträgt und das Halbzeug einen Gesamtglasgehalt von 30 bis 60 Gew.-% aufweist.

2. Glasfaserverstärktes, thermoplastisch verformbares Halbzeug, enthaltend ein thermoplastisches Polymeres und ein durch Nadelung fixiertes textiles Flächengebilde, dadurch gekennzeichnet, daß das textile Flächengebilde besteht aus:
A. mindestens einer Schicht A aus einem Fasergewebe mit einem Flächengewicht von mehr als 300 g/m², enthaltend 80 - 97 Gew.-% Glasfasern in Schußrichtung und 20 - 3 Gew.-% Glasfasern oder Thermoplastfasern in Kettrichtung, und
B. mindestens einer Schicht B aus einer Glasfasermatte mit nicht orientierten Fasern,
wobei das Gewichtsverhältnis Fasergewebe A zu Fasermatten B 75:25 bis 30:70 beträgt und das Halbzeug einen Gesamtglasgehalt von 30 bis 60 Gew.-% aufweist.

3. Faserverstärktes Halbzeug nach den Ansprüchen 1 oder 2, dadurch gekennzeichnet, daß die Anordnung der Schichten A und B in dem textilen Flächengebilde symmetrisch ist.

4. Faserverstärktes Halbzeug nach Anspruch 3, dadurch gekennzeichnet, daß die Schichten folgende Anordnung aufweisen:
ABA, ABABA, ABABABA, BAB, BABAB, BABABAB.

5. Faserverstärktes Halbzeug nach den Ansprüchen 1 oder 2, dadurch gekennzeichnet, daß das thermoplastische Polymere der Polymermatrix ein teilkristalliner Thermoplast ist.

6. Faserverstärktes Halbzeug nach Anspruch 5, dadurch gekennzeichnet, daß das thermoplastische Polymere Polypropylen ist.

7. Faserverstärktes Halbzeug nach den Ansprüchen 1 oder 2, dadurch gekennzeichnet, daß die Thermoplastfasern aus einem teilkristallinen Thermoplasten bestehen.

8. Faserverstärktes Halbzeug nach Anspruch 7, dadurch gekennzeichnet, daß das thermoplastische Polymere Polypropylen ist.
